# EUROPEAN PATENT SPECIFICATION

(11) **EP 1 629 643 B1**
(45) Date of publication and mention of the grant of the patent: **06.02.2008**
(21) Application number: 04745622.3
(22) Date of filing: 31.05.2004
(51) Int. Cl.: H04L 12/56, H04L 12/28

(54) **Device, method, and program for performing master/slave switching process**
Einrichtung, Verfahren und Computerprogramm zur Durchführung eines Master/Slave-Rollenwechsels
Dispositif, procédé et programme permettant d'effectuer un processus de commutation maitre/esclave

(30) Priority: 02.06.2003 JP 2003156684
(43) Date of publication of application: 01.03.2006
(73) Proprietor: MATSUSHITA ELECTRIC INDUSTRIAL CO., LTD, Kadoma-shi, Osaka 571-8501 (JP)
(72) Inventor: KASHIWABARA, Kazuyuki, Hiroshima 730-0013 (JP); FUJIMORI, Hideki, Hiroshima 731-0154 (JP); ARASE, Yoshitaka, Hiroshima 739-0651 (JP); NISHIMURA, Yoshiko, Hiroshima 730-0014 (JP)
(74) Representative: Gassner, Wolfgang
(86) International application number: PCT/JP2004/007859
(87) International publication number: WO 2004/109996

(56) References cited:
- EP-A- 1 324 540
- WO-A-01/03379
- PATENT ABSTRACTS OF JAPAN vol. 2000, no. 21, 3 August 2001 (2001-08-03) & JP 2001 103570 A (TOSHIBA CORP), 13 April 2001 (2001-04-13)
- ZHANG W ET AL: "On Improving the Performance of Bluetooth Networks THROUGH DYNAMIC ROLE MANAGEMENT" May 2001 (2001-05), , XP002198269 paragraph [0001] paragraph [02.2] paragraph [0003]
- BRAY J ET AL: "BLUETOOTH - Connect Without Cables , PASSAGE" BLUETOOTH CONNECT WITHOUT CABLES, XX, XX, 2001, pages 42-45,52, XP002243377

## Description

### TECHNICAL FIELD

The present invention relates to devices, methods, and programs for performing master/slave switching process. More specifically, the present invention relates to a master/slave switching method for use in a network system where a master device manages slave devices, a device that performs the method, and a program for performing the method.

### BACKGROUND ART

In recent years, various technologies have been suggested for connecting a plurality of devices to form a network in which information stored in one device is used by another device and one device remotely controls another device. One example of such technologies is a technology using a PAN profile of Bluetooth (R).

In general, in a network system formed by connecting a plurality of devices, one device (hereinafter referred to as a master device) manages all of the other devices (hereinafter referred to as slave device) in order to prevent a conflict in data communication performed among the devices. In this management, the master device provides a transmission right to a slave device, relays data transmission and reception among the slave devices, etc.

In such a system in which the master device manages all of the slave devices, the communication performance in the entire network largely depends on the performance of the master device. Therefore, a technology has been suggested for automatically determining a device most suitable as the master device. In this conventional technology, each device is provided in advance with a level for use in determining the master device. When a new device is connected to the network, all of the connected devices are compared with one another based on their levels, and a device having the highest level determined as the master device.

Now, since the master device manages the entire network system, processing load and power consumption of the master device are large compared with those of the slave device. Particularly, most devices that incorporate a wireless communication technology, such as Bluetooth (R), are battery-powered portables, and therefore the amount of power consumption required for functioning as the master device is hardly negligible. However, in the above-mentioned conventional technology, the device having the highest level is always set as the master device irrespectively of a device' s state changing with time, such as the remaining amount of battery and the processing load. Moreover, the master device is never switched unless another device having a higher level than the current master device is newly connected to the network. Therefore, when an inconvenience, such as battery exhaustion, occurs to the current master device, the network might be down.

In order to get around the above problem, the master device is set in consideration of the state of each device as well as the performance of each device. However, when the network system is a home network system in which home electric appliances are connected to one another, for example, the state of each home electric appliance is likely to vary depending on time of day and season. Therefore, the master device is preferably set in consideration of the state and performance of each device at the time of setting and also a change in the state of each device that is expected to occur afterward.

Patent Abstracts of Japan, vol. 2000, no. 21, 3 August 2001 (2001-08-03) & JP 2001-103570 A (Toshiba Corp.), 13 April 2001 (2001-04-13) discloses a device having a master function for use in a network system in which a master device manages at least one slave device. The device comprises a device's own device information managing section operable to manage device's own device information which includes a predetermined information, regarding a change of the device; a schedule information managing section operable to manage schedule information indicative of master device candidates; a device information processing section operable, when the device operates as the master device, to specify a slave device from among a plurality of slave devices which are the master device candidates indicated by the schedule information and operable to obtain predetermined information regarding a state change of the specified slave device from the specified slave device; and a switch controlling section operable to compare the predetermined information regarding the state change of the specified slave device obtained by the device information processing section with a predetermined information regarding the state change of the device included in the device's own device information, and operable, when the state change of the specified slave device is smaller than the state change of the device, to switch between a master operation operated by the device and a slave operation operated by the specified slave device.

WO 01/03379 A1 describes a data transmission network, comprising a number of nodes which are set up to function optionally as a master or a slave. The master is in a position to command a slave which guarantees the best transmission quality to the remaining slaves, to take over the master function.

Zhang W. et al.: "On Improving the Performance of Bluetooth Networks Through Dynamic Role Management", May 2001, (2001-05), XP-002198269 also refers to a similar data transmission network.

An object of the present invention is to provide a device that performs a master/slave switching process for dynamically changing a device most suitable as a master device in a network in consideration of the performance and state of each device at the time of setting and also a change in the state of each device that are expected to occur afterwards a method of performing the master/slave switching process and a program therefore.

This object is solved by the features of claims 1, 8, 9 and 10. Embodiments of the invention are described by the features of claims 2 to 7. The device according to the present invention includes a device's own device information managing section, an other device information managing section, a schedule information managing section, a device information processing section, and a switch controlling section.

The device's own device information managing section manages device's own device information regarding its own device. The other device information managing section manages other device information regarding at least one another device connected to the network system, the other device information including at least availability of the master function. The schedule information managing section manages schedule information indicative of master device candidates by predetermined segment. When the device operates as the master device, the device information processing section specifies a slave device which is one of the master device candidates having the master function based on the other device information and the schedule information, and obtains predetermined information from the specified slave device. The switch controlling section controls switching between a master operation and a slave operation based on the predetermined information obtained by the device information processing section and the predetermined information included in the device's own device information.

Typical examples of the predetermined time are a time when a device having the master function is newly connected to the network system, and a time when a change occurs to the device's own device information managed by the device's own device information managing section. The change of the device's own device information is preferably resource information required for the master operation, a reduction in a remaining amount of battery, or a deterioration in communication quality. Also, the predetermined segment may be a segment of time of day or season. Furthermore, preferably, the switch controlling section transmits the other device information managed by the other device information managing section to a device newly performing the master operation.

Also, processes performed by the sections of the device can be collectively taken as a master/slave switching method including the series of these processes. That is, the master/slave switching method includes the steps of: specifying, at a predetermined time, a slave device which is one of master device candidates having a master function based on other device information including at least availability of the master function of other devices connected to a network and schedule information indicative of master device candidates by predetermined segment; obtaining predetermined information from the specified slave device; and controlling switching of a master operation and a slave operation based on the predetermined information obtained in the information obtaining step and predetermined information of device' s own device information of the device currently performing the master operation.

The functional blocks forming the above-described device may be achieved by an LSI. Also, the master/slave switching method may be provided in a form of a program for causing a computer to perform a series of processes. This program may be introduced to a computer as being recorded on a computer-readable recording medium.

As described above, according to the present invention, the device functioning as the master device is dynamically changed among the devices forming the network. With this, even if an inconvenience, such as battery exhaustion, occurs to the current master device, the current master device is switched to a new master device for maintaining the network. Also, even if the environment of the devices changes with time, it is possible to narrow down the most suitable master device candidate with the use of the schedule information. This reduces the load on the system caused by the master/slave switching process.

### BRIEF DESCRIPTION OF THE DRAWINGS

FIG. 1 is an illustration showing the concept of a network configured by devices performing a master/slave switching process according to a first embodiment of the present invention.
FIG. 2 is a block diagram illustrating the detailed structure of a master device.
FIGS. 3A and 3B are illustrations showing examples of schedule information managed by a schedule information managing section.
FIG. 4 is an illustration showing one example of device's own device information managed by a device's own device information managing section.
FIG. 5 is an illustration showing one example of other device information managed by an other device information managing section.
FIG. 6 is a flowchart showing a procedure of a master/slave switching method performed by the devices according to the first embodiment of the present invention.
FIG. 7 is a flowchart showing a detailed procedure of a master/slave switching process (step S610) of FIG. 6.
FIG. 8 is a sequence diagram showing the procedure of FIG. 7.
FIG. 9 is a flowchart showing another detailed procedure of the master/slave switching process (step S610) of FIG. 6.
FIG. 10 is a sequence diagram showing the procedure of FIG. 9.
FIG. 11 is a flowchart showing another procedure of the master/slave switching method performed by the devices according to the first embodiment of the present invention.
FIGS. 12A and 12B are illustrations for describing schemes for determining a master device.
FIG. 13 is a flowchart showing a detailed procedure performed in a master/slave switching process (step S1108) of FIG. 11.
FIG. 14 is a flowchart showing another detailed procedure performed in the master/slave switching process (step S1108) of FIG. 11.
FIGS. 15A and 15B are illustrations showing the concept of a network configured by devices performing a master/ slave switching process according to a second embodiment of the present invention.
FIG. 16 is an illustration showing an example of a system specifically achieving the network of FIGS. 15A and 15B.

### BEST MODE FOR CARRYING OUT THE INVENTION

### (First Embodiment)

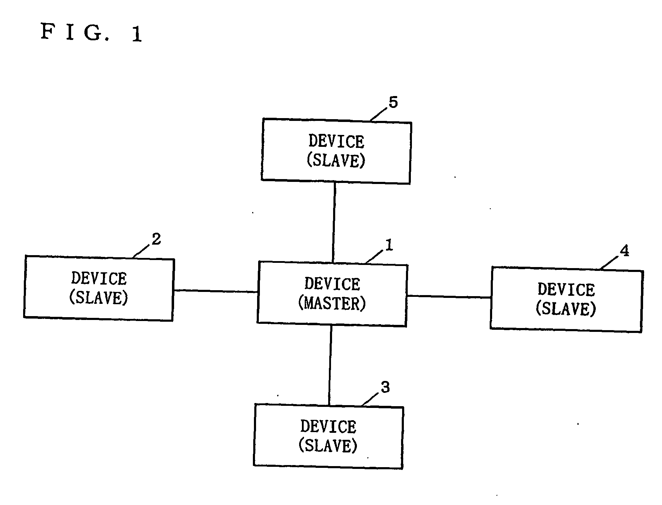

FIG. 1 is an illustration showing the concept of a network configured by devices performing a master/slave switching process according to a first embodiment of the present invention. As shown in FIG. 1, the network according to the first embodiment is configured by one master device being connected to one or more slave devices in a wired or wireless manner for intercommunication. FIG. 1 shows an example of the network in which a device 1 functioning as a master device manages devices 2 through 5 functioning as slave devices. Description is made below to a mixed network of devices having a master function for functioning as a master device and a slave function for functioning as a slave device and devices having only the slave function

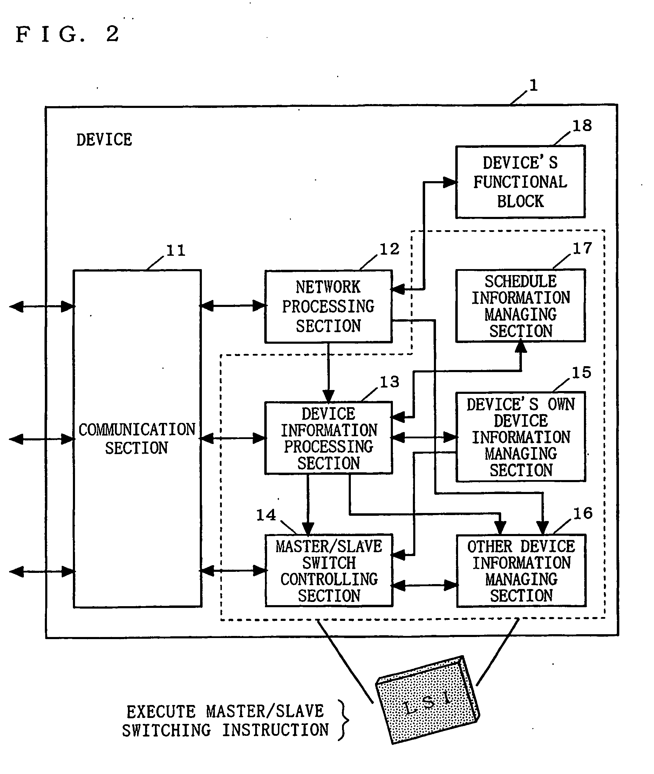

FIG. 2 is a block diagram illustrating the detailed structure of the device 1, which is the master device in FIG. 1. In FIG. 2, the device 1 includes a communication section 11, a network processing section 12, a device information processing section 13, a master/slave switch controlling section 14, a device's own device information managing section 15, anotherdeviceinformation managing section 16, a schedule information managing section 17, and a device' s functional block 18. Each of the devices 2 through 5, which are the slave devices, has the same structure as that of FIG. 2 if they have the master function. If they do not have the master function, each of the devices 2 through 5 has a structure similar to that of FIG. 2, except that the master/slave switch controlling section 14 and the other device information managing section 16 are omitted. In the following description, for the sake of clear distinction of the components included in each device, components included in a device *i* (*i* = 1 to 5) are represented as a communication section *i*1, a network processing section *i*2, a device information processing section *i*3, a master/slave switch controlling section *i*4, a device's own device information managing section *i*5, an other device information managing section *i*6, a schedule information managing section *i*7, and a device's functional block *i*8.

First, each component included in the device *i* is schematically described.

The communication section *i*1 performs a predetermined communication with a communication section(s) *j*1 (*j* is any other than *i*) of another device(s) *j* in response to instructions from the network processing section *i*2, the device information processing section *i*3 and the master/slave switch controlling section *i*4. The network processing section *i*2 performs a necessary process when its own device *i* or another device *j* newly participates in the network. The device information processing section *i*3 performs an information obtaining process and an information comparing and determining process based on schedule information (which will be described further below) to determine whether a master/slave switching process is to be performed. The master/slave switch controlling section *i*4 performs a predetermined switching process when the device information processing section *i*3 determines that the master/slave switching process is to be performed. The device's own device information managing section *i*5 stores and manages predetermined information (device's own device information) regarding the device *i*. The other device information managing section *i*6 stores and manages predetermined information (other device information) regarding the device(s) *j*. The schedule information managing section *i*7 stores and manages schedule information indicative of master device candidates by predetermined segment. The device's functional block *i*8 is a section that performs primary functions of the device *i.* For example, if the device *i* is a television set, the device's functional block *i*8 corresponds to a functional section for receiving a program and displaying the received program on a screen.

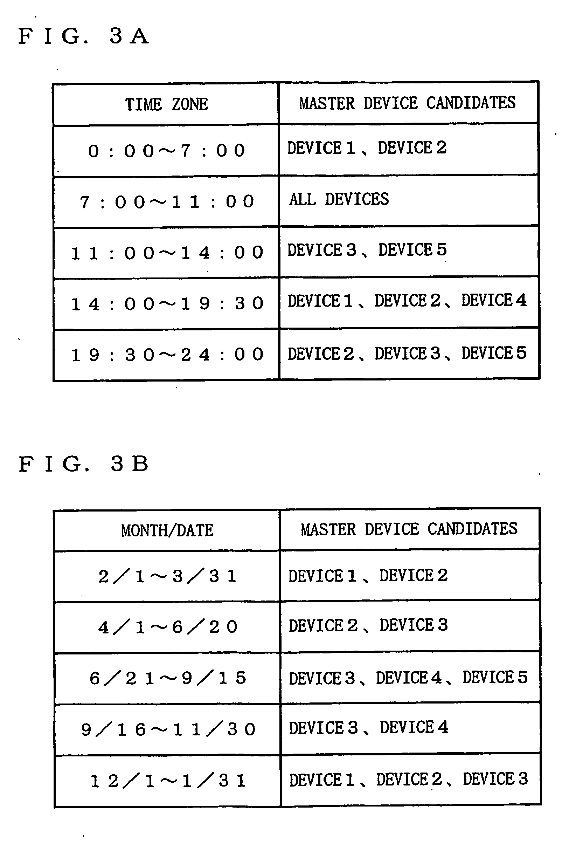

The schedule information managed by the schedule information managing section *i*7 is used for narrowing down master device candidates in performing a master/slave switching process. This schedule information is useful when the environment where devices are placed is changed with time, such as when the present invention is applied to a home network. As well known, the home network is assumed to include various home electric appliances connected to one another, such as information devices (personal computers, facsimile machines, etc.), audiovisual devices (televisions, video recorders, etc.), cooking devices (microwave ovens, refrigerators, etc.), and air-conditioning devices (coolers, fan heaters, etc.). Each type of such devices has its own time zone and season when the device is frequently used. For example, it is expected that cooking devices are frequently used in the early evening for preparing dinner and so are televisions thereafter in family time, and coolers are frequently used in summer and so are fan heaters in winter. Therefore, it is preferable that a device expected to be used during a specific time zone or season should be excluded from master device candidates during that time zone or season. In order to narrow down master device candidates, schedule information as exemplarily illustrated in FIG. 3A or 3B is used. FIG. 3A depicts a schedule divided into time zones. For example, in FIG. 3A, master device candidates in a time zone of 11:00 to 14:00 are the device 3 and the device 5. FIG. 3B depicts a schedule divided into seasons (dates). For example, in FIG. 3B, master device candidates from April 1 to June 20 are the device 2 and the device 3. Alternatively, the schedule information may have registered thereon devices not suitable as master devices.

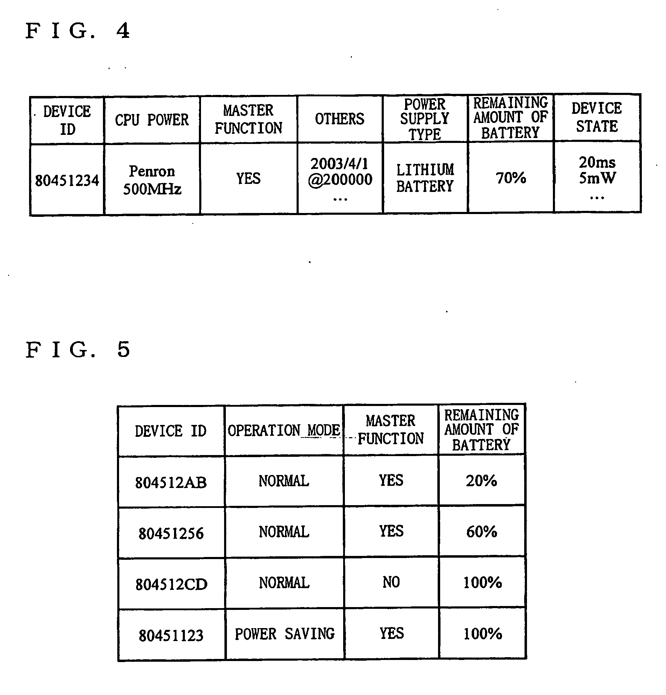

FIG. 4 is an illustration showing one example of the device's own device information managed by the device's own device information managing section *i*5. Note that not all items included in the device's own device information are required to be stored in the device's own device information managing section *i*5, but it suffices that at least items that are referred to for the master/slave switching process, which will be described further below, are stored.

In FIG. 4, the device's own device information includes items indicative of fixed performance of the device, such as its device ID, CPU power, and availability of the master function, and items indicative of variable states of the device, such as power supply type, the remaining amount of battery, and the device's condition. The device ID is identification information f or uniquely specifying the device. In Bluetooth (R), BD_Address corresponds to this device ID. The CPU power is represented by a type of the CPU and an operating clock frequency. Availability of the master function indicates whether the device has the master function (master process routine). Items other than the above included in the device's own device information are, for example, manufacturing date, standard price, rank set for each product. The power supply type indicates whether the device is powered by AC power supply or battery and, when powered by battery, indicates a type of battery (alkaline, lithium, etc). The remaining amount of battery indicates the remaining amount when the power supply type is battery. This remaining amount of battery may be represented by a ratio (%) of the remaining amount of battery to the maximum amount thereof or by an estimated remaining time for operation. When the power supply type is AC power supply, the remaining amount of battery may be set to have a maximum value or a predetermined value other than the maximum value for distinction. The device's condition includes a power-applied time, a use time, a transmission output level, a time from reception of a request to transmission of a response (a response time), information indicative of whether the device is in a power-saving mode, a CPU running ratio for measuring a load on a CPU, and the like.

FIG. 5 is an illustration showing one example of the other device information stored by the other device information managing section *i*6. Note that the other device information is not restricted to the information depicted in FIG. 5, but may be freely set according to the information referred to when the master/slave switching process, which will be described further below, is performed.

In FIG. 5, the other device information stored in the other device information managing section 16 is related to every slave device *j* connected to the network, and is held only by the master device *i*. Every time a new device *j* participates in the network, the master device *i* obtains necessary information from the device' s own device information stored in the device's own device information managing section *j*5 of the new device *j,* and stores the obtained information in the other device information managing section *i*6. In the example of FIG. 1, since the device 1 is the master device, only the other device information managing section 16 of the device 1 has stored therein information regarding the other devices 2 through 5, which are the slave devices, as the other device information. Examples of items included in the other device information are, as for each device *j* connected to the network as a slave device, a device ID (address), an operation mode (normal/power-saving), availability of the master function, the remaining amount of battery, and quality of communication between the device *i* and the device(s) *j* (error rate, electric field strength, etc).

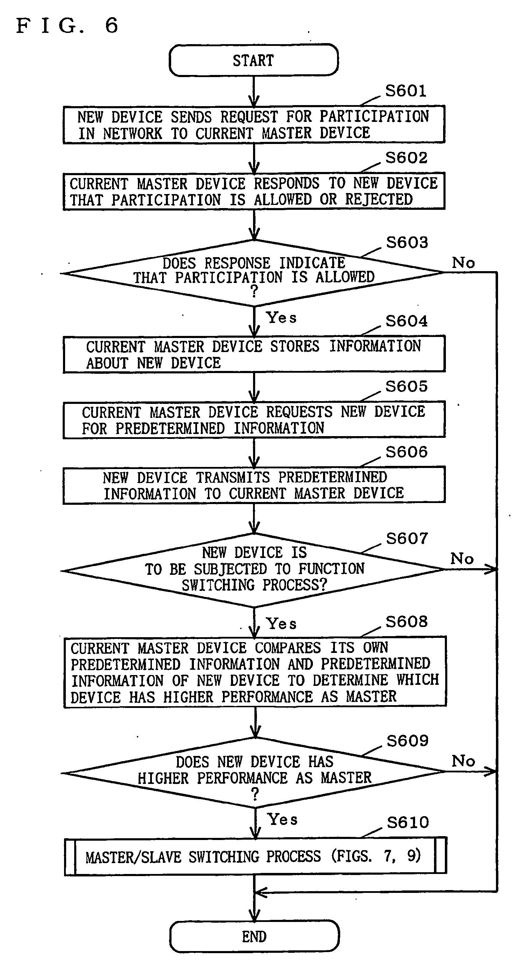

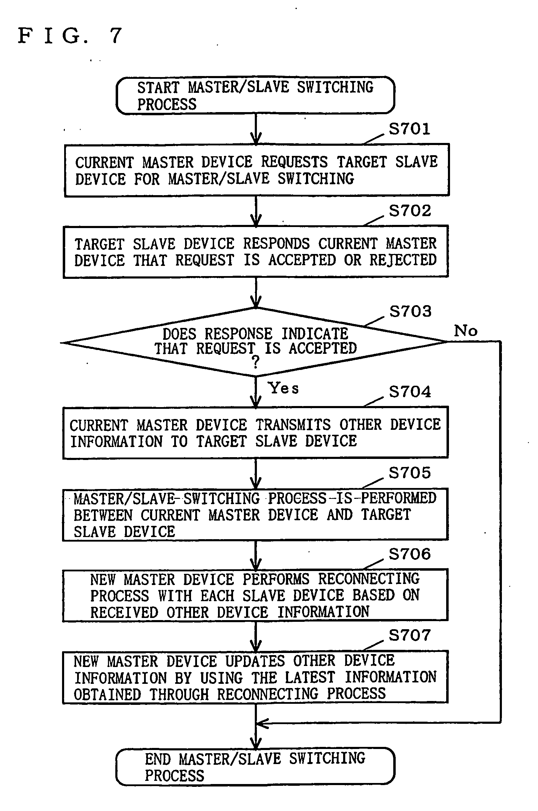

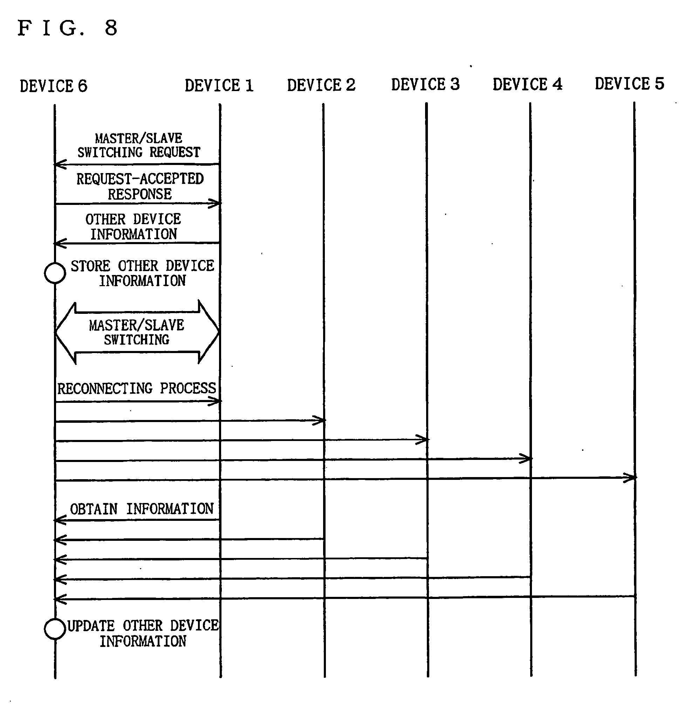

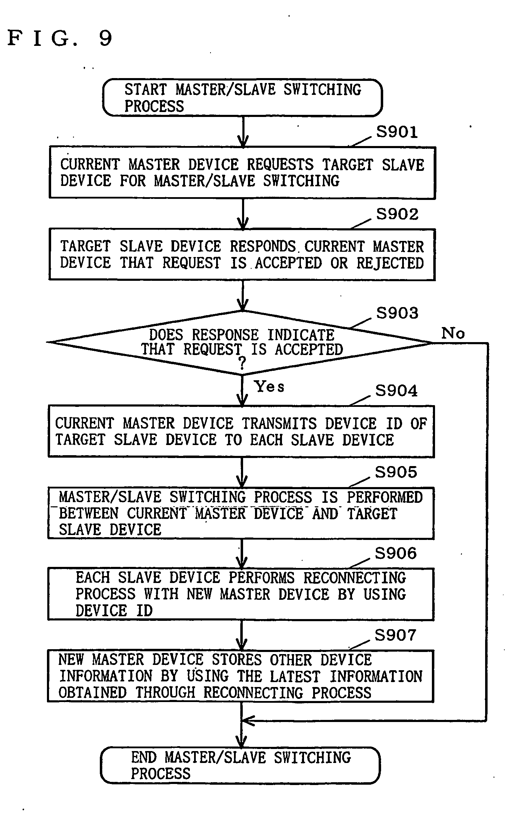

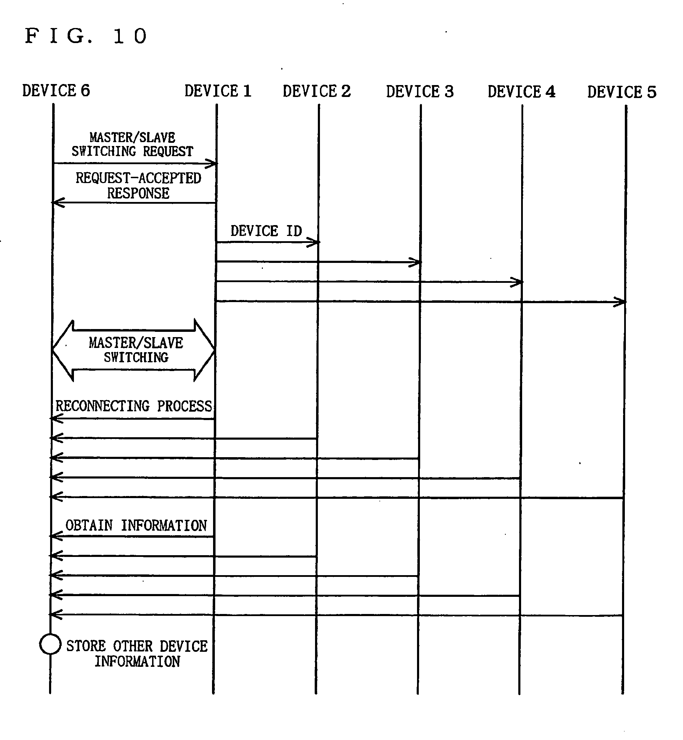

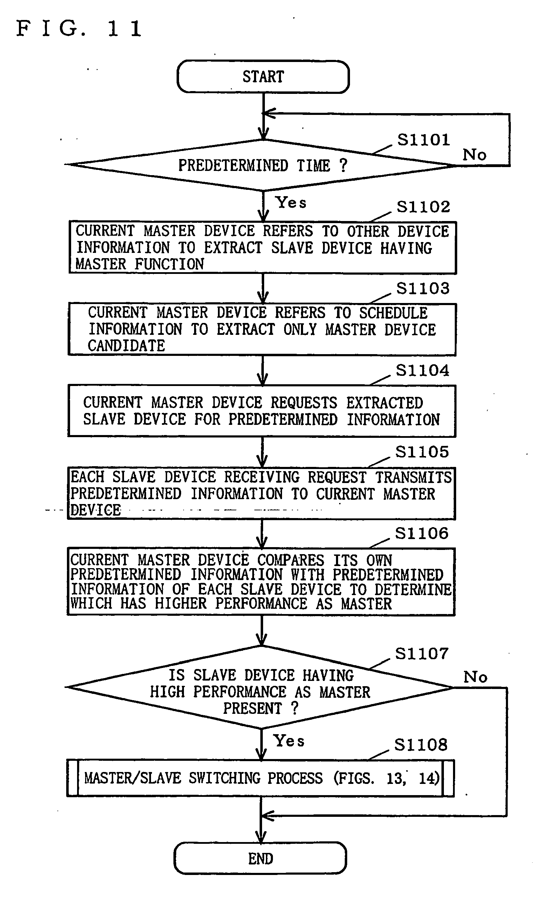

Next, with further reference to FIGS. 6 through 14, the master/slave switching process according to the present invention to be performed between the above-structured devices in the network shown in FIG. 1 is exemplarily described. In the present embodiment, description is made to the following two cases: one is that the master/slave switching process is performed upon participation of a new device in the network and the other is that the process is performed at other times. Furthermore, in the present embodiment, it is assumed that the master/slave switching process is performed based on the remaining amount of battery of each device.
(1) The case where the master/slave switching process is performed upon participation of a new device in the network:
   Here, the following discussion is based on the premise that the master device 1 and the slave devices 2 through 5 have their device's own device information (FIG. 4) stored in the device's own device information managing sections 15, 25, 35, 45, and 55, respectively. Furthermore, the master device 1 has the other device information regarding the slave devices 2 through 5 (FIG. 5) stored in the other device information managing section 16.
   A device 6 to newly participate in the network generates a network participation request at the network processing section 62, and then transmits the generated request to the device 1 (step S601). When the device 1 receives the network participation request, the network processing section 12 determines whether to allow participation, and then sends a response for allowing or rejecting participation to the device 6 (step S602). When allowing participation of the device 6, the network processing section 12 stores the information received from the device 6 in the other device information managing section 16 (steps S603 and S604). With this, the device 6 participates in the network as a slave device. This new participation of the device 6 in the network is reported from the network processing section 12 to the device information processing section 13.
   Upon reception of the report, the device information processing section 13 sends a request through the communication section 11 to the device 6 for predetermined information required for determination to be made in the master/slave switching process, the predetermined information including information indicative of whether the device 6 has the master function (step S605). The predetermined information is resource information required for the master operation. In the present embodiment, as the predetermined information, availability of the master function and the remaining amount of battery are requested. However, the predetermined information to be requested can be freely designed depending on the performance and the objective of the system to be configured, and the like. Also, this request for the predetermined information can be sent at one time or a plurality of times. When the request is sent at a plurality of times, its response can be sent at one time or a plurality of times.
   When the device 6 receives the request for the predetermined information from the device 1, the device information processing section 63 extracts information regarding availability of the master function and the current remaining amount of battery from the device's own device information managing section 65, and then sends the extracted information to the device 1 (step S606).
   When the device 1 receives the predetermined information from the device 6, the device information processing section 13 stores the predetermined information, that is, availability of the master function and the remaining amount of battery, in the other device information managing section 16. Next, the device information processing section 13 determines whether the device 6 is to be subjected to the master/slave switching process (step S607). In this step S607, it is determined that the device 6 is to be subjected to the master/slave switching process when it is known based on the other device information and the schedule information that the device 6 has the master function and is a master device candidate. When determining that the device 6 is to be subjected to the switching process, the device information processing section 13 reports as such to the master/slave switch controlling section 14. Upon reception of the report, the master/slave switch controlling section 14 extracts the information regarding the remaining amount of battery of the device 6 from the other device information managing section 16 and the information regarding the remaining amount of battery of the device 1 from the device's own device information managing section 15. The master/slave switch controlling section 14 then compares both pieces of information to determine whether the device 6 is more suitable as the master device than the device 1, that is, whether the performance of the device 6 is higher as the master device than that of the device 1 (steps S608 and S609). Specifically, the device whose ratio of the remaining amount of battery is larger or whose estimated remaining time for operation is longer is determined as the device more suitable as the master device.
   When information other than the remaining amount of battery is used for determination, the following scheme can be taken. When the power supply type is used, a priority order is set in advance, such as "AC power supply> lithium battery > nickel cadmium battery > alkaline battery> manganese battery". Based on the priority order, which of the devices 1 and 6 has a higher priority can be determined. Also, when the CPU power is used for determination, a device having a higher-performance CPU or a higher clock frequency is determined as the device more suitable as the master device. Furthermore, when the manufacturing date or the standard price is used for determination, based on the fact that a device having a newer manufacturing date or a higher standard price tends to have a higher-performance CPU or a higher clock frequency, determination is made similarly according to the above. When the device's condition is used for determination, a device having a longer power-applied time, a longer use time, a higher transmission output level, a higher response, or a higher CPU running ratio is determined as the device more suitable as the master device. When a rank is given to each product, determination is made in accordance with the rank. In the foregoing, determination is made by using a specific item of information. Alternatively, determination may be made by using a plurality of the above-described items of information each assigned with a weight.
   Upon determination that the device 6 is more suitable (has a higher performance) as the master device, the master/slave switch controlling section 14 of the device 1 performs, in cooperation with the master/slave switch controlling section 64 of the device 6, a master/slave switching process for causing the device 6 to perform a master operation (step S610). This master/slave switching process is performed in the following two ways (refer to FIGS. 7 through 10).
   a. First master/slave switching process (FIGS. 7 and 8)
      The device 1 transmits a master/slave switching request to the device 6, which is subjected to the master/slave switching process (step S701). Upon reception of the master/slave switching request, the device 6 transmits a response indicating that the request is accepted or rejected to the device 1 (step S702). The request is rejected in cases such as where the device 6 is once connected to the network but this connection is merely temporary and disconnection is scheduled shortly thereafter or where it is difficult to perform a master operation in view of the CPU power (for example, the device 6 is currently playing back moving pictures, and therefore taking on other tasks are not desired).
      Upon reception of the response indicating that the request is accepted, the device 1 transmits the other device information stored in the other device information managing section 16 to the device 6 (steps S703 and S704). The device 6 then stores the other device information received from the device 1 in the other device information managing section 66 and performs a master/slave switching process with the device 1 (step S705). With this, the device 6, which has been a slave device, becomes the master device, while the device 1, which has been the master device, becomes a slave device.
      The device 6 then performs a reconnecting process on the slave devices 2 through 5 based on the other device information stored in the other device information managing section 66, and reports to them that the device 6 has become a new master device (step S706). Simultaneously with this process, the device 6 obtains the latest other device information from each of the devices 1 through 5 to update the other device information stored in the other device information managing section 66 (step S707). The connection that has been established between the device 1 and the devices 2 through 5 may be cut out when the device 1 transmits the other device information to the device 6 or when the device 6 performs a reconnecting process on the devices 2 through 5.
   b. Second master/slave switching process (FIGS. 9 and 10)
      The device 1 transmits a master/slave switching request to the device 6 (step S901). Upon reception of the master/slave switching request, the device 6 transmits a response indicating that the request is accepted or rejected to the device 1 (step S902). The cases where the request is rejected have been described above.
      Upon reception of the response indicating the request is accepted, the device 1 transmits the device ID (address) of the device 6, which will become a new master device, to each of the devices 2 through 5 based on the other device information stored in the other device information managing section 16 (steps S903 and S904). The device 6 then performs a master/slave switching process with the device 1 (step S905). With this, the device 6, which has been a slave device, becomes the master device, while the device 1, which has been the master device, becomes a slave device.
      The devices 2 through 5 then use their device IDs to perform a reconnecting process on the device 6 (step S906). Simultaneously with this process, the device 6 obtains the latest other device information from each of the devices 1 through 5, and stores the obtained information in the other device information managing section 66 (step S907). Alternatively, the other device information may be sent in advance from the device 1 to the device 6 for update at the time of the reconnecting process. Still alternatively, the other device information may be newly generated at the time of the reconnecting process. Also, the connection that has been established between the device 1 and the devices 2 through 5 may be cut out when the device 1 performs a master/slave switching process with the device 6 or when the devices 2 through 5 performs a reconnecting process on the device 6.
(2) The case where the master/slave switching process is performed at a predetermined time:

Here, the following discussion is based on the premise that the master device 1 and the slave devices 2 through 5 have the device's own device information (FIG. 4) stored in the device's own device information managing section 15, 25, 35, 45, and 55, respectively. Furthermore, the master device 1 has the other device information regarding the slave devices 2 through 5 (FIG. 5) stored in the other device information managing section 16.

The device information processing section 13 of the device 1 determines whether a predetermined time has come (step S1101). The predetermined time may be a predetermined time of day, a predetermined time interval, a time when the state of the device is changed, such as a time when a command is issued, a time when the remaining amount of battery is changed or a time when the communication quality is deteriorated, or a time when the processing load of the CPU is changed. The change of the remaining amount of battery can be easily detected by, for example, determining whether the remaining amount of battery is lower than a predetermined threshold. The degradation in communication quality can be easily detected by, for example, determining whether an error rate (frequency of occurrence of a retransmitting process) as to data received from each slave device has been increased or determining whether the electric field intensity has been attenuated. Examples of the time when a master/slave switching process unique to a home network is required are a time when a master video device starts preprogrammed recording and a time when a master facsimile machine starts receiving facsimile.

When it is determined that the predetermined time has come, the device information processing section 13 refers to the other device information stored in the other device information managing section 16 to extract devices having the master function (step S1102). The device information processing section 13 then refer to the schedule information managed by the schedule information managing section 17 to further extract only master device candidates from the devices extracted in step S1102 (step S1103). The device information processing section 13 then transmits, to the extracted master device candidates, a request for the predetermined information required for determining whether to perform the master/slave switching process (in the present embodiment, a request for the remaining amount of battery) (step S1104).

The device information processing section *i*3 of each device *i* receiving the request for the remaining amount of battery extracts the information about the current remaining amount of battery from the device's own information managing section *i*5, and then transmits the extracted information to the device 1 (step S1105).

When the device 1 receives the remaining amount of battery from each device *i*, the device information processing section 13 stores the received remaining amount of battery in the other device information managing section 16, and also reports the received remaining amount of battery to the master/slave switch controlling section 14. Upon reception of this report, the master/slave switch controlling section 14 extracts the information about the remaining amount of battery of each device *i* from the other device information managing section 16 and the information about the remaining amount of battery of the device 1 from the device's own device information managing section 15. The master /slave switch controlling section 14 then compares all pieces of extracted information to determine whether a device that is more suitable as the master device than the device 1 is present, that is, whether a device whose performance as the master device is higher than that of the device 1 is present (step S1106). Specifically, the device whose ratio of the remaining amount is the largest or whose estimated remaining time for operation is the longest is determined as the device most suitable as the master device.

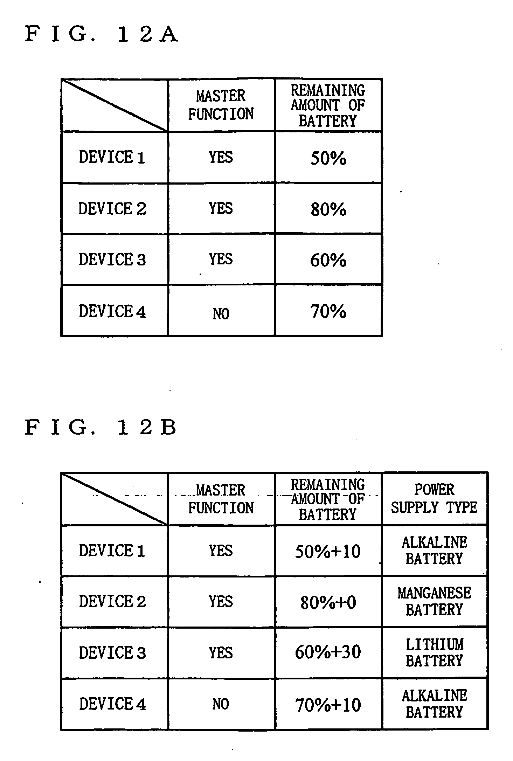

For example, when the remaining amounts of battery of the devices 1 through 5 are as shown in FIG. 12A, the device 2 is determined as the device most suitable as the master device. At this time, if the above-mentioned power supply type is taken into consideration, a predetermined coefficient is set for each power supply type according to the priority order. Then, by adding the predetermined coefficient to the remaining amount of battery or by multiplying the remaining amount of battery by the predetermined coefficient, the device most suitable as the master device is determined (FIG. 12B). In this case, the device 3 is determined as the device most suitable as the master device. Determination to be made by using information other than the remaining amount of battery has been described above.

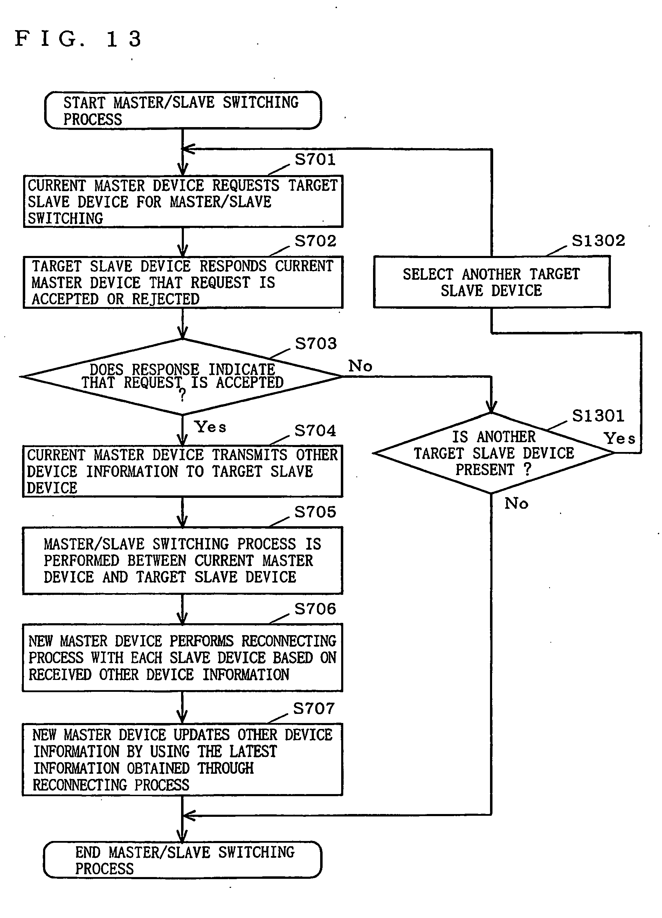

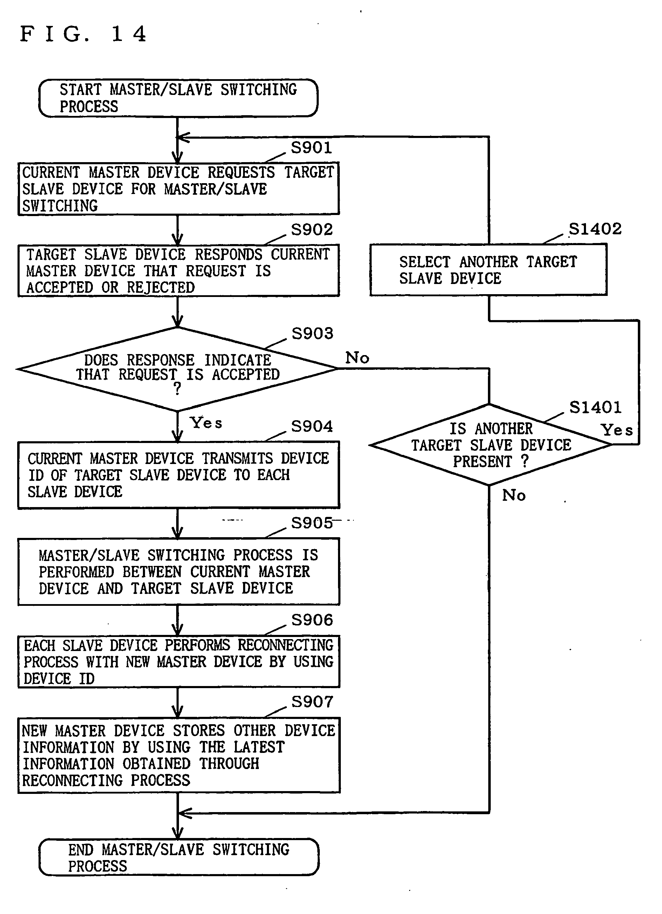

Upon determination that a device that is more suitable (has a higher performance) as the master device than the device 1 is present, the master/slave switch controlling section 14 of the device 1 performs, in cooperation with the master/slave switch controlling section of the more suitable device, a master/slave switching process for causing the more suitable device to perform a master operation (steps S1107 and S1108). This master/slave switching process in step S1108 is performed basically in the above-described two ways (refer to FIGS. 7 through 10). However, the master/slave switching process in step S1108 is different from that shown in FIGS. 7 through 10 in the following point. That is, as shown in FIGS. 13 and 14, assuming that there are a plurality of master device candidates, when a first one of them rejects the master/slave switching request, the next one is subjected to a predetermined process. A routine of such a predetermined process is shown in steps S1301 and S1302 of FIG. 13 and steps S1401 and S1402 of FIG. 14. Hereinafter, this different point is additionally described.

Upon receiving the response rejecting the request, the device 1 determines whether another slave device suitable as the master device is present (steps S1301 and S1401). If such a slave device is present, the device 1 again performs a master/slave switching process on this slave device (steps S1302 and S1402).

As described above, according to the device performing the master/slave switching process of the first embodiment of the present invention, the device functioning as the master device is dynamically changed among the devices forming the network. With this, even if an inconvenience, such as battery exhaustion, occurs to the current master device, the current master device is switched to a new master device for maintaining the network. Also, even if the environment of the devices changes with time, it is possible to narrow down the most suitable master device candidate with the use of the schedule information. This reduces the load on the system caused by the master/slave switching process.

### (Second Embodiment)

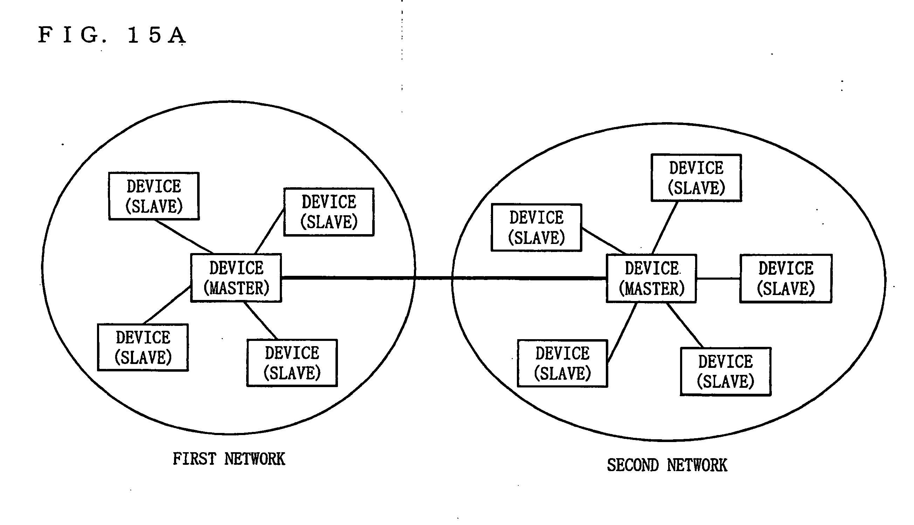

FIG. 15A is an illustration showing the concept of a network configured by devices performing a master/slave switching process according to a second embodiment of the present invention. As shown in FIG. 15A, the network according to the second embodiment has the structure in which a first network and a second network, each of which includes one master device and one or more slave deices as described in the first embodiment, are connected to each other at their master devices. For example, in the wireless communication technology, such as Bluetooth (R), the first network and the second network correspond to Piconets, while the network according to the second embodiment that includes these two networks corresponds to a Scatternet. A feature of the second embodiment is that the master/slave switching process is performed between the first network and the second network. In the network according to the second embodiment, the master devices of the first and second networks each perform the master function and the slave function simultaneously. This is because, when viewed from the master device of the first network, the master device of the second network is one of the slave devices and, when viewed from the master device of the second network, the master device of the first network is one of the slave devices.

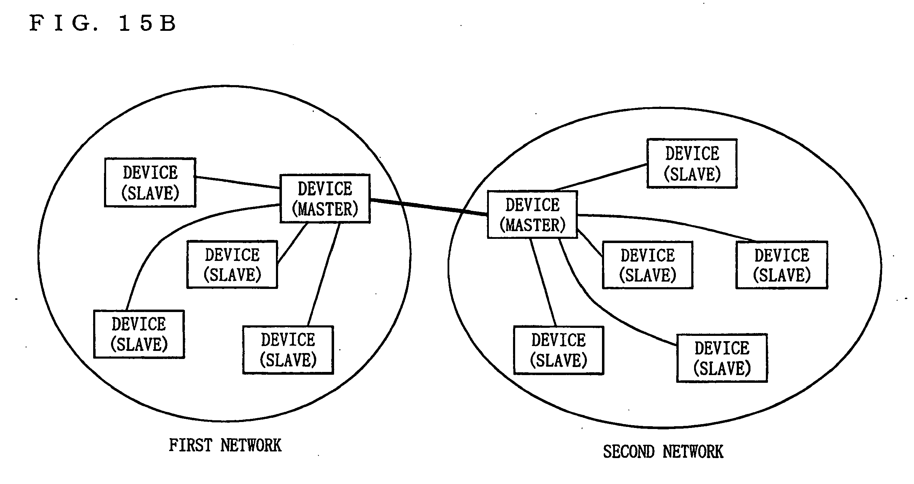

In the state shown in FIG. 15A, when the device state is changed, such as when the communication quality is deteriorated, the master/slave switching process is performed on the relation between the master devices of the first and second networks. In this process, either one or both of the error rate and the electric field intensity are checked for all combinations of the devices included in the first and second networks. Here, if the schedule information is used together, the number of combinations of the devices can be reduced, thereby reducing the processing load on the system. Of these combinations, one combination of devices that is most suitable is then selected. On the selected devices, the master/slave switching process is then performed in each of the first and second networks. Finally, a new master device in the first network after switching and a new master device in the second network after switching are connected to each other. With this, as shown in FIG. 15B, for example, a pair of devices, one in the first network and the other in the second network, can be determined as the master devices.

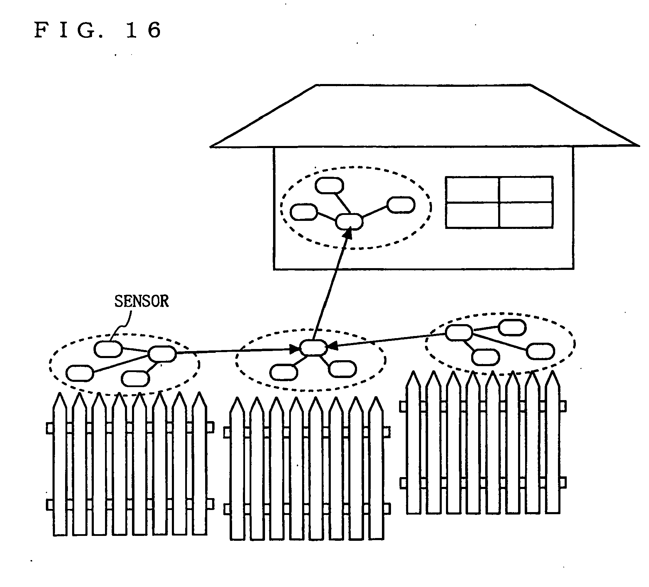

As has been described in the foregoing, according to the device for performing the master/slave switching process of the second embodiment of the present invention, even when a plurality of small networks are combined to form one large network, the effect of the first embodiment can be obtained. A specific example is shown in FIG. 16, in which a plurality of security sensors (devices) for preventing crime form a several number of small networks, and these small networks further form a large network.

In the device that performs the master/slave switching process of the present invention, each of the functional blocks of the device information processing section 13, the master/slave switch controlling section 14, the device's own device information managing section 15, the other device information managing section 16, and the schedule information managing section 17 are typically achieved by a large-scale integrated (LSI) circuit (called an IC, a system LSI, a super LSI, a ultra LSI, or the like, depending on the degree of integration) (refer to FIG. 2). Each of the blocks may be formed on one chip, or all or part of the blocks may be formed on one chip.

Also, circuit integration is achieved not only by an LSI but also by a dedicated circuit or a general-purpose processor. Further, a Field Programmable Gate Array (FPGA), which is programmable after manufacturing the LSI, or a reconfigurable processor capable of reconfiguring the connection of circuit cells and the setting inside the LSI can be used.

Furthermore, integration of the functional blocks can be performed by using a new circuit integration technology that would replace the LSI technology with the advance of the semiconductor technology or with the advent of another derivative technology. One possible technology that would be adapted for use is a biotechnological technique.

Furthermore, the method of performing the master/slave switching process of the present invention is achieved by a CPU interpreting predetermined program data that is stored in a storage device (a ROM; a RAM, a hard disk, etc.) and is capable of causing the above-described processes to be performed. In this case, the program data may be introduced through a recording medium to the storage device, or may be executed directly from the recording medium.

### INDUSTRIAL APPLICABILITY

The present invention can be used for a network system in which a master device manages slave devices, for example, and is particularly suitable when a device most suitable as the master device in the network system is dynamically changed in consideration of the performance and state of each device.

## Claims

1. A device having a master function for use in a network system in which a master device (1) manages at least one slave device (2, 3, 4, 5), the device comprising:
a device's own device information managing section (15) operable to manage device's own device information, which includes at least predetermined information, regarding a state change of the device;
an other device information managing section (16) operable to manage other device information regarding at least one another device connected to the network system, the other device information including at least availability of the master function;
a schedule information managing section (17) operable to manage schedule information indicative of master device candidates by a plurality of segments of at least time of day or season;
a device information processing section (13) operable, when the device operates as the master device, to specify, at a predetermined time, a slave device (2, 3, 4, 5) from among a plurality of slave devices (2, 3, 4, 5) which are the master device candidates indicated by the schedule information in a segment of time of day or season corresponding to the predetermined time based on the other device information, and operable to obtain predetermined information regarding a state change of the specified slave device (2, 3, 4, 5) from the specified slave device (2, 3, 4, 5) ; and
a switch controlling section (14) operable to compare the predetermined information regarding the state change of the specified slave device (2, 3, 4, 5) obtained by the device information processing section with the predetermined information regarding the state change of the device included in the device's own device information, and operable, when the state change of the specified slave device (2, 3, 4, 5) is smaller than the state change of the device, to switch between a master operation operated by the device and a slave operation operated by the specified slave device (2, 3, 4, 5).

2. The device according to claim 1, wherein
the master device candidates indicated by the schedule information in a segment of time of day is at least one device other than a device which is likely to be frequently used in the segment of time of day.

3. The device according to claim 1, wherein
the master device candidates indicated by the schedule information in a segment of season is at least one device other than a device which is likely to be frequently used in the segment of season.

4. The device according to claim 1, wherein
the switch controlling section transmits the other device information managed by the other device information managing section to the specified slave device (2, 3, 4, 5).

5. The device according to claim 1, wherein
the predetermined time is a time when a change occurs to the device's own device information managed by the device's own device information managing section (15).

6. The device according to claim 5, wherein
the change of the device's own device information is a reduction in a remaining amount of battery.

7. The device according to claim 5, wherein
the change of the device's own device information is a deterioration in communication quality.

8. A master/slave switching method to be performed on a device currently performing a slave operation by a device currently performing a master operation, the method comprising the steps of:
managing a schedule information indicative of master device candidates by a plurality of segments of at least time of day or season;
specifying, at a predetermined time, a slave device (2, 3, 4, 5) from among a plurality of slave devices (2, 3, 4, 5) which are master device candidates indicated by schedule information in a segment of at least time of day or season corresponding to the predetermined time based on the other device information including at least availability of the master function of other devices connected to a network;
obtaining predetermined information regarding a state change of the specified device from the specified slave device (2, 3, 4, 5); and
comparing (S608) the predetermined information regarding the state change of the specified slave device (2, 3, 4, 5) obtained in the information obtaining step with predetermined information regarding the state change of the device of device's own device information of the device currently performing the master operation; and
switching (S610), when the state change of the specified slave device (2, 3, 4, 5) is smaller than the state change of the device, between a master operation operated by the device and a slave operation operated by the specified slave device (2, 3, 4, 5).

9. A computer-readable program for causing a device currently performing a master operation to perform a method of performing a master/slave switching process on a device currently performing a slave operation, the program comprising the steps of:
managing a schedule information indicative of master device candidates by a plurality of segments of at least time of day or season;
specifying, at a predetermined time, a slave device (2, 3, 4, 5) from among a plurality of slave devices (2, 3, 4, 5) which are master device candidates indicated by schedule information in a segment of at least time of day or season corresponding to the predetermined time based on the other device information including at least availability of the master function of other devices connected to a network;
obtaining predetermined information regarding a state change of the specified device from the specified slave device (2, 3, 4, 5); and
comparing (S608) the predetermined information regarding the state change of the specified slave device (2, 3, 4, 5) obtained in the information obtaining step with predetermined information regarding the state change of the device of device's own device information of the device currently performing the master operation; and
switching (S610), when the state change of the specified slave device (2, 3, 4, 5) is smaller than the state change of the device, between a master operation operated by the device and a slave operation operated by the specified slave device (2, 3, 4, 5).

10. An integrated circuit for use in a device having a master function, the device being used in a network system in which a master device manages at least one slave device (2, 3, 4, 5), the circuit comprising:
a device's own device information managing section (15) operable to manage device's own device information, which includes at least predetermined information, regarding a state change of a device including the circuit;
an other device information managing section (16) operable to manage other device information regarding at least one another device connected to the network system, the other device information including at least availability of the master function;
a schedule information managing section (17) operable to manage schedule information indicative of master device candidates by a plurality of segments of at least time of day or season;
a device information processing section (13) operable, when the device operates as the master device, to specify, at a predetermined time, a slave device (2, 3, 4, 5) from among a plurality of slave devices (2, 3, 4, 5) which are the master device candidates indicated by the schedule information in a segment of time of day or season corresponding to the predetermined time based on the other device information, and operable to obtain predetermined information regarding a state change of the specified slave device (2, 3, 4, 5) from the specified slave device (2, 3, 4, 5); and
a switch controlling section (14) operable to compare the predetermined information regarding the state change of the specified slave device (2, 3, 4, 5) obtained by the device information processing section with the predetermined information regarding the state change of the device included in the device's own device information, and operable, when the state change of the specified slave device (2, 3, 4, 5) is smaller than the state change of the device, to switch between a master operation operated by the device and a slave operation operated by the specified slave device (2, 3, 4, 5).

## Patentansprüche

1. Vorrichtung aufweisend eine Masterfunktion zum Verwenden in einem Netzwerksystem, in welchem eine Mastervorrichtung (1) mindestens eine Slavevorrichtung (2, 3, 4, 5) verwaltet, wobei die Vorrichtung umfasst:
einen vorrichtungseigenen Vorrichtungsinformationsverwaltungsabschnitt (15), der betriebsfähig ist, vorrichtungseigene Vorrichtungsinformationen zu verwalten, welcher mindestens vorbestimmte Informationen bezüglich eines Statuswechsels der Vorrichtung enthält;
einen weiteren Vorrichtungsinformationsverwaltungsabschnitt (16), der betriebsfähig ist, weitere Vorrichtungsinformationen bezüglich mindestens einer weiteren mit dem Netzwerksystem verbundenen Vorrichtung zu verwalten, wobei die weiteren Vorrichtungsinformationen mindestens eine Verfügbarkeit der Masterfunktion enthalten;
einen Ablaufinformationsverwaltungsabschnitt (17), der betriebsfähig ist, Ablaufinformationen zum Anzeigen von Mastervorrichtungsanwärtern durch eine Vielzahl von Segmenten mindestens der Tageszeit oder Jahreszeit zu verwalten;
einen Vorrichtungsinformationsverarbeitungsabschnitt (13), der betriebsfähig ist, wenn die Vorrichtung als die Mastervorrichtung betrieben wird, zu einer vorbestimmten Zeit unter einer Vielzahl von Slavevorrichtungen (2, 3, 4, 5), welche die durch die Ablaufinformationen in einem Segment der Tageszeit oder Jahreszeit angezeigten Mastervorrichtungsanwärtern sind, eine Slavevorrichtung (2, 3, 4, 5) zu spezifiezeren, korrespondierend zu der vorbestimmten Zeit auf Grundlage der weiteren Vorrichtungsinformationen, und betriebsfähig ist, vorbestimmte Informationen bezüglich eines Statuswechsels der spezifizierten Slavevorrichtung (2, 3, 4, 5) von der spezifizierten Slavevorrichtung (2, 3, 4, 5) zu erhalten; und
einen Schaltersteuerungsabschnitt (14), der betriebsfähig ist, die durch den Vorrichtungsinformationsverarbeitungsabschnitt erhaltenen vorbestimmten Informationen bezüglich des Statuswechsels der spezifizierten Slavevorrichtung (2, 3, 4, 5) mit den in den vorrichtungseigenen Vorrichtungsinformationen enthaltenen vorbestimmten Informationen bezüglich des Statuswechsels der Vorrichtung zu vergleichen, und der betriebsfähig ist, wenn der Statuswechsel der spezifizierten Slavevorrichtung (2, 3, 4, 5) kleiner ist als der Statuswechsel der Vorrichtung, zwischen einem durch die Vorrichtung betriebenen Masterbetrieb und einem durch die spezifizierte Slavevorrichtung (2, 3, 4, 5) betriebenen Slavebetrieb zu schalten.

2. Vorrichtung nach Anspruch 1, wobei die durch die Ablaufinformationen in einem Segment der Tageszeit angezeigten Mastervorrichtungsanwärter mindestens eine weitere Vorrichtung ist, als eine Vorrichtung, welche voraussichtlich häufig in dem Segment der Tageszeit verwendet wird.

3. Vorrichtung nach Anspruch 1, wobei die durch die Ablaufinformationen in einem Segment der Jahreszeit angezeigten Mastervorrichtungsanwärter mindestens eine weitere Vorrichtung ist, als eine Vorrichtung, welche vorraussichtlich häufig in dem Segment der Jahreszeit verwendet wird.

4. Vorrichtung nach Anspruch 1, wobei der Schaltersteuerungsabschnitt die weiteren durch den weiteren Vorrichtungsinformationsverwaltungsabschnitt verwalteten Vorrichtungsinformationen an die spezifizierte Slavevorrichtung (2, 3, 4, 5) überträgt.

5. Vorrichtung nach Anspruch 1, wobei die vorbestimmte Zeit eine Zeit ist, wenn ein Wechsel der durch den vorrichtungseigenen Vorrichtungsinformationsverwaltungsteil (15) verwalteten vorrichtungseigenen Vorrichtungsinformationen auftritt.

6. Vorrichtung nach Anspruch 5, wobei der Wechsel der vorrichtungseigenen Vorrichtungsinformationen ein Reduzieren einer verbleibenden Batteriemenge ist.

7. Vorrichtung nach Anspruch 5, wobei der Wechsel der vorrichtungseigenen Vorrichtungsinformationen eine Verschlechterung der Datenübertragungsqualität ist.

8. Master-/Slaveschaltverfahren zum Ausführen auf einer Vorrichtung, die derzeit einen Slavebetrieb durch eine derzeit einen Masterbetrieb ausführende Vorrichtung ausführt, wobei das Verfahren die Schritte umfasst, des:
Verwaltens einer Ablaufinformation zum Anzeigen von Mastervorrichtungsanwärtern durch eine Vielzahl von Segmenten mindestens der Tageszeit oder Jahreszeit;
Spezifizierens einer Slavevorrichtung (2, 3, 4, 5) zu einer vorbestimmten Zeit unter einer Vielzahl von Slavevorrichtungen (2, 3, 4, 5), welche die durch die Ablaufinformationen in einem Segment mindestens der Tageszeit oder Jahreszeit angezeigten Mastervorrichtungsanwärtern sind, korrespondierend zu der vorbestimmten Zeit auf Grundlage der weiteren mindestens eine Verfügbarkeit der Masterfunktion von weiteren mit dem Netzwerk verbundenen Vorrichtungen enthaltenden Vorrichtungsinformationen;
Erhaltens vorbestimmter Informationen bezüglich eines Statuswechsels der spezifizierten Vorrichtung von der spezifizierten Slavevorrichtung (2, 3, 4, 5); und
Vergleichens (S608) der in dem Erhaltungsschritt erhaltenen vorbestimmten Informationen bezüglich des Statuswechsels der spezifizierten Slavevorrichtung (2, 3, 4, 5) mit vorbestimmten Informationen bezüglich des Statuswechsels der Vorrichtung von vorrichtungseigenen Vorrichtungsinformationen der derzeit den Masterbetrieb ausführenden Vorrichtung; und
Schaltens (S610), wenn der Statuswechsel der spezifizierten Slavevorrichtung (2, 3, 4, 5) kleiner ist als der Statuswechsel der Vorrichtung, zwischen einem durch die Vorrichtung betriebenen Masterbetrieb und einem durch die spezifizierte Slavevorrichtung (2, 3, 4, 5) betriebenen Slavebetrieb.

9. Computerlesbares Programm zum Veranlassen einer derzeit einen Masterbetrieb ausführenden Vorrichtung, ein Verfahren einer Master-/Slaveschaltvorgangsausführung auf einer derzeit einen Slavebetrieb ausführenden Vorrichtung auszuführen, wobei das Programm die Schritte umfasst, des:
Verwaltens einer Ablaufinformation zum Anzeigen von Mastervorrichtungsanwärtern durch eine Vielzahl von Segmenten mindestens der Tageszeit oder Jahreszeit;
Spezifizierens einer Slavevorrichtung (2, 3, 4, 5) zu einer vorbestimmten Zeit unter einer Vielzahl von Slavevorrichtungen (2, 3, 4, 5), welche die durch die Ablaufinformationen in einem Segment mindestens der Tageszeit oder Jahreszeit angezeigten Mastervorrichtungsanwärtern sind, korrespondierend zu der vorbestimmten Zeit auf Grundlage der weiteren mindestens eine Verfügbarkeit der Masterfunktion von weiteren mit dem Netzwerk verbundenen Vorrichtungen enthaltenden Vorrichtungsinformationen;
Erhaltens vorbestimmter Informationen bezüglich eines Statuswechsels der spezifizierten Vorrichtung von der spezifizierten Slavevorrichtung (2, 3, 4, 5); und
Vergleichens (S608) der in dem Erhaltungsschritt erhaltenen vorbestimmten Informationen bezüglich des Statuswechsels der spezifizierten Slavevorrichtung (2, 3, 4, 5) mit vorbestimmten Informationen bezüglich des Statuswechsels der Vorrichtung von vorrichtungseigenen Vorrichtungsinformationen der derzeit den Masterbetrieb ausführenden Vorrichtung; und
Schaltens (S610), wenn der Statuswechsel der spezifizierten Slavevorrichtung (2, 3, 4, 5) kleiner ist als der Statuswechsel der Vorrichtung, zwischen einem durch die Vorrichtung betriebenen Masterbetrieb und einem durch die spezifizierte Slavevorrichtung (2, 3, 4, 5) betriebenen Slavebetrieb.

10. Integrierte Schaltung zum Verwenden in einer Vorrichtung aufweisend eine Masterfunktion, wobei die Vorrichtung in einem Netzwerk verwendet wird, in welchem eine Mastervorrichtung mindestens eine Slavevorrichtung (2, 3, 4, 5) verwaltet, wobei die Schaltung umfasst:
einen vorrichtungseigenen Vorrichtungsinformationsverwaltungsabschnitt (15), der betriebsfähig ist, vorrichtungseigene Vorrichtungsinformationen zu verwalten, welcher mindestens vorbestimmte Informationen bezüglich eines Statuswechsels einer die Schaltung enthaltende Vorrichtung enthält;
einen weiteren Vorrichtungsinformationsverwaltungsabschnitt (16), der betriebsfähig ist, weitere Vorrichtungsinformationen bezüglich mindestens einer weiteren mit dem Netzwerksystem verbundenen Vorrichtung zu verwalten, wobei die weiteren Vorrichtungsinformationen mindestens eine Verfügbarkeit der Masterfunktion enthalten;
einen Ablaufinformationsverwaltungsabschnitt (17), der betriebsfähig ist, Ablaufinformationen zum Anzeigen von Mastervorrichtungsanwärtern durch eine Vielzahl von Segmenten mindestens der Tageszeit oder Jahreszeit zu verwalten;
einen Vorrichtungsinformationsverarbeitungsabschnitt (13), der betriebsfähig ist, wenn die Vorrichtung als die Mastervorrichtung betrieben wird, zu einer vorbestimmten Zeit unter einer Vielzahl von Slavevorrichtungen (2, 3, 4, 5), welche die durch die Ablaufinformationen in einem Segment der Tageszeit oder Jahreszeit angezeigten Mastervorrichtungsanwärtern sind, eine Slavevorrichtung (2, 3, 4, 5) zu spezifiezeren, korrespondierend zu der vorbestimmten Zeit auf Grundlage der weiteren Vorrichtungsinformationen, und betriebsfähig ist, vorbestimmte Informationen bezüglich eines Statuswechsels der spezifizierten Slavevorrichtung (2, 3, 4, 5) von der spezifizierten Slavevorrichtung (2, 3, 4, 5) zu erhalten; und
einen Schaltersteuerungsabschnitt (14), der betriebsfähig ist, die durch den Vorrichtungsinformationsverarbeitungsabschnitt erhaltenen vorbestimmten Informationen bezüglich des Statuswechsels der spezifizierten Slavevorrichtung (2, 3, 4, 5) mit den in den vorrichtungseigenen Vorrichtungsinformationen enthaltenen vorbestimmten Informationen bezüglich des Statuswechsels der Vorrichtung zu vergleichen und der betriebsfähig ist, wenn der Statuswechsel der spezifizierten Slavevorrichtung (2, 3, 4, 5) kleiner ist als der Statuswechsel der Vorrichtung, zwischen einem durch die Vorrichtung betriebenen Masterbetrieb und einem durch die spezifizierte Slavevorrichtung (2, 3, 4, 5) betriebenen Slavebetrieb zu schalten.

## Revendications

1. Dispositif ayant une fonction maîtresse à utiliser dans un système de réseau dans lequel un dispositif maître (1) gère au moins un dispositif esclave (2, 3, 4, 5), le dispositif comprenant:
une section de gestion d'information de dispositif propre au dispositif (15) exploitable pour gérer une information de dispositif propre au dispositif, qui inclut au moins une information prédéterminée, concernant un changement d'état du dispositif;
une section de gestion d'une information d'un autre dispositif (16) exploitable pour gérer une information d'un autre dispositif concernant au moins un autre dispositif connecté au système de réseau, l'information d'un autre dispositif incluant au moins une disponibilité de la fonction maîtresse;
une section de gestion d'information de planification (17) exploitable pour gérer une information de planification indiquant des candidats de dispositif maître par plusieurs segments d'au moins une heure du jour ou de saison;
une section de traitement d'information de dispositif (13) exploitable, lorsque le dispositif fonctionne comme le dispositif maître, pour spécifier, à un temps prédéterminée, un dispositif esclave (2, 3, 4, 5) parmi plusieurs dispositifs esclaves (2, 3, 4, 5) qui sont les candidats de dispositif maître indiqués par l'information de planification dans un segment d'heure du jour ou de saison correspondant au temps prédéterminé sur la base de l'information d'un autre dispositif, et exploitable pour obtenir une information prédéterminée concernant un changement d'état du dispositif esclave spécifié (2, 3, 4, 5) à partir du dispositif esclave spécifié (2, 3, 4, 5); et
une section de commande de commutation (14) exploitable pour comparer l'information prédéterminée concernant le changement d'état du dispositif esclave spécifié (2, 3, 4, 5) obtenue par la section de traitement d'information de dispositif à l'information prédéterminée concernant le changement d'état du dispositif incluse dans l'information du dispositif propre au dispositif, et exploitable, lorsque le changement d'état du dispositif esclave spécifié (2, 3, 4, 5) est inférieur au changement d'état du dispositif, pour effectuer une commutation entre une opération maîtresse exploitée par le dispositif et une opération esclave exploitée par le dispositif esclave spécifié (2, 3, 4, 5).

2. Dispositif selon la revendication 1, dans lequel
les candidats de dispositif maître indiqués par l'information de planification dans un segment d'heure du jour est au moins un dispositif autre qu'un dispositif qui est susceptible d'être fréquemment utilisé dans le segment d'heure du jour.

3. Dispositif selon la revendication 1, dans lequel
les candidats de dispositif maître indiqués par l'information de planification dans un segment de saison est au moins un dispositif autre qu'un dispositif qui est susceptible d'être fréquemment utilisé dans le segment de saison.

4. Dispositif selon la revendication 1, dans lequel
la section de commande de commutation transmet l'information d'un autre dispositif gérée par la section de gestion d'une information d'un autre dispositif au dispositif esclave spécifié (2, 3, 4, 5).

5. Dispositif selon la revendication 1, dans lequel
le temps prédéterminé est un temps lorsqu'un changement se produit à l'information de dispositif propre au dispositif gérée par la section de gestion d'information du dispositif propre au dispositif (15).

6. Dispositif selon la revendication 5, dans lequel
le changement de l'information du dispositif propre au dispositif est une réduction d'une quantité restante d'une batterie.

7. Dispositif selon la revendication 5, dans lequel
le changement de l'information du dispositif propre au dispositif est une détérioration d'une qualité de communication.

8. Procédé de commutation maître/esclave à effectuer sur un dispositif effectuant présentement une opération esclave par un dispositif effectuant présentement une opération maîtresse, le procédé comprenant les étapes de:
gérer une information de planification indiquant des candidats de dispositif maître par plusieurs segments d'au moins une heure du jour ou de saison;
spécifier, à un temps prédéterminé, un dispositif esclave (2, 3, 4, 5) parmi plusieurs dispositifs esclaves (2, 3, 4, 5) qui sont des candidats au dispositif maître indiqués par une information de planification dans un segment d'au moins une heure du jour ou de saison correspondant au temps prédéterminé sur la base de l'information d'un autre dispositif incluant au moins la disponibilité de la fonction maîtresse des autres dispositifs connectés à un réseau;
obtenir une information prédéterminée concernant un changement d'état du dispositif spécifié à partir du dispositif esclave spécifié (2, 3, 4, 5); et
comparer (S608) l'information prédéterminée concernant le changement d'état du dispositif esclave spécifié (2, 3, 4, 5) obtenue à l'étape d'obtention d'information à une information prédéterminée concernant le changement d'état du dispositif d'une information de dispositif propre au dispositif du dispositif effectuant présentement l'opération maîtresse; et
effectuer une commutation (S610), lorsque le changement d'état du dispositif esclave spécifié (2, 3, 4, 5) est inférieur au changement d'état du dispositif, entre une opération maîtresse exploitée par le dispositif et une opération esclave exploitée par le dispositif esclave spécifié (2, 3, 4, 5).

9. Programme lisible par un ordinateur pour amener un dispositif effectuant présentement une opération maîtresse à effectuer un procédé d'exécution d'un processus de commutation maître/esclave sur un dispositif effectuant présentement une opération esclave, le programme comprenant les étapes de:
gérer une information de planification indiquant des candidats au dispositif maître par plusieurs segments d'au moins une heure du jour ou de saison.
spécifier, à un temps prédéterminé, un dispositif esclave (2, 3, 4, 5) parmi plusieurs dispositifs esclaves (2, 3, 4, 5) qui sont des candidats au dispositif maître indiqués par une information de planification dans un segment d'au moins une heure du jour ou de saison correspondant au temps prédéterminé sur la base de l'information d'un autre dispositif incluant au moins une disponibilité de la fonction maîtresse d'autres dispositifs connectés à un réseau;
obtenir une information prédéterminée concernant un changement d'état du dispositif spécifié à partir du dispositif esclave spécifié (2, 3, 4, 5); et
comparer (S608) l'information prédéterminée concernant le changement d'état du dispositif esclave spécifié (2, 3, 4, 5) obtenue à l'étape d'obtention d'information à une information prédéterminée concernant le changement d'état du dispositif de l'information du dispositif propre au dispositif du dispositif effectuant présentement une opération maîtresse; et
effectuer une commutation (S610), lorsque le changement d'état du dispositif esclave spécifié (2, 3, 4, 5) est inférieur au changement d'état du dispositif, entre une opération maîtresse exploitée par le dispositif et une opération esclave exploitée par le dispositif esclave spécifié (2, 3, 4, 5).

10. Circuit intégré à utiliser dans un dispositif ayant une fonction maîtresse, le dispositif étant utilisé dans un système de réseau dans lequel un dispositif maître gère au moins un dispositif esclave (2, 3, 4, 5), le circuit comprenant:
une section de gestion d'information de dispositif propre au dispositif (15) exploitable pour gérer une information de dispositif propre au dispositif, qui inclut au moins une information prédéterminée, concernant un changement d'état d'un dispositif incluant le circuit;
une section de gestion d'une information d'un autre dispositif (16) exploitable pour gérer une information d'un autre dispositif concernant au moins un autre dispositif connecté au système de réseau, l'information d'un autre dispositif incluant au moins une disponibilité de la fonction maîtresse;
une section de gestion d'information de planification (17) exploitable pour gérer une information de planification indiquant des candidats au dispositif maître par plusieurs segments d'au moins une heure d jour ou de saison;
une section de traitement d'information de dispositif (13) exploitable, lorsque le dispositif fonctionne comme le dispositif maître, pour spécifier, à un temps prédéterminé, un dispositif esclave (2, 3, 4, 5) parmi plusieurs dispositifs esclaves (2, 3, 4, 5) qui sont les candidats au dispositif maître indiqués par l'information de planification dans un segment d'heure du jour ou de saison correspondant au temps prédéterminé sur la base de l'information d'un autre dispositif, et exploitable pour obtenir une information prédéterminée concernant un changement d'état du dispositif esclave spécifié (2, 3, 4, 5) à partir du dispositif esclave spécifié (2, 3, 4, 5); et
une section de commande de commutation (14) exploitable pour comparer l'information prédéterminée concernant le changement d'état du dispositif esclave spécifié (2, 3, 4, 5) obtenue par la section de traitement d'information de dispositif à l'information prédéterminée concernant le changement d'état du dispositif incluse dans l'information du dispositif propre au dispositif, et exploitable, lorsque le changement d'état du dispositif esclave spécifié (2, 3, 4, 5) est inférieur au changement d'état du dispositif, pour effectuer une commutation entre une opération maîtresse exploitée par le dispositif et une opération esclave exploitée par le dispositif esclave spécifié (2, 3, 4, 5).
